# EUROPEAN PATENT APPLICATION

(11) **EP 3 992 883 A1**
(43) Date of publication of application: **04.05.2022**
(21) Application number: 19934782.4
(22) Date of filing: 25.06.2019
(51) Int. Cl.: G06Q 20/06

(54) **DIGITAL CERTIFICATE PROCESSING METHOD, GATEWAY, DEVICE, SYSTEM, MEDIUM, AND PROGRAM PRODUCT**

(71) Applicant: ANTPOOL TECHNOLOGIES LIMITED, Wanchai, Hong Kong (CN)
(72) Inventor: LI, Qun, Beijing 100192 (CN); XU, Lingchao, Beijing 100192 (CN); YU, Jinfeng, Beijing 100192 (CN)
(74) Representative: Appelt, Christian W.
(86) International application number: PCT/CN2019/092842
(87) International publication number: WO 2020/258044

(57) **Abstract**

The present application relates to a digital certificate processing method and system, a gateway, a device, a medium, and a program product. The digital certificate processing method is a distributed digital certificate processing method, which is applied to a gateway. The distributed digital certificate processing method includes: polling a digital certificate processing node to obtain latest digital certificate processing task template data; generating simplified task template data of a digital certificate processing task based on the digital certificate processing task template data; and distributing the simplified task template data to a digital certificate processing service device.

## Description

### Technical Field

The present application relates to the field of blockchain technologies, and in particular to a distributed digital certificate processing method, a gateway, a digital certificate processing service device, a distributed digital certificate processing system, a computer-readable storage medium, and a computer program product.

### Background Art

In the related art, a digital certificate processing service process involves a digital certificate processing device, a digital certificate processing service device, and a digital certificate processing node. Distributed digital certificate processing with a large number of widely distributed digital certificate processing devices usually involves one or more digital certificate processing service nodes, which are connected to a corresponding digital certificate processing node.

A digital certificate processing service includes two main working procedures: a digital certificate processing task generation and delivery procedure and a block submission procedure. In the digital certificate processing task generation and delivery procedure, the digital certificate processing node usually uses a remote procedure call (RPC) service or a P2P protocol to provide and send data of an original task of digital certificate processing to the digital certificate processing service device. Such data includes a block header, a transaction list, or other data. Generally, transaction data has a relatively large size of typically more than 1M bytes, and some digital certificate transaction data can even reach 30M bytes or more. The plurality of digital certificate processing service devices each read large volume data from the digital certificate processing node frequently, which imposes a heavy computational load and network load on the digital certificate processing node and the digital certificate processing service devices. Moreover, the transmission of large volume data over a network causes a certain network delay. In addition, to obtain a latest digital certificate processing task in a timely manner, the plurality of digital certificate processing service devices usually poll an RPC service of the digital certificate processing node frequently, which increases the computational load and the network load on the digital certificate processing service devices.

### Summary of the Invention

The present application is intended to solve at least one of the technical problems existing in the prior art. To this end, a first objective of the present application is to provide a distributed digital certificate processing method. The method can reduce computational load and network load of a digital certificate processing node and a digital certificate processing service device.

A second objective of the present application is to provide a gateway.

A third objective of the present application is to provide another distributed digital certificate processing method.

A fourth objective of the present application is to provide another gateway.

A fifth objective of the present application is to provide a gateway.

A sixth objective of the present application is to provide a distributed digital certificate processing method.

A seventh objective of the present application is to provide a digital certificate processing service device.

An eighth objective of the present application is to provide another digital certificate processing service device.

A ninth objective of the present application is to provide a distributed digital certificate processing system.

A tenth objective of the present application is to provide a computer-readable storage medium.

An eleventh objective of the present application is to provide a computer program product.

To achieve the first objective, a distributed digital certificate processing method according to an embodiment of a first aspect of the present application, which is applied to a gateway, includes: polling a digital certificate processing node to obtain latest digital certificate processing task template data; generating simplified task template data of a digital certificate processing task based on the digital certificate processing task template data; and distributing the simplified task template data to a digital certificate processing service device.

According to the distributed digital certificate processing method in this embodiment of the present application, the gateway polls the digital certificate processing node, which can reduce computational load and network load of the digital certificate processing node and a plurality of digital certificate processing service devices, in comparison with the prior art in which the plurality of digital certificate processing service devices each read large volume data from the digital certificate processing node frequently. In addition, the digital certificate processing task template data is converted into the simplified task template data, and the data unnecessary for the digital certificate processing task, especially the transaction data having a large data volume, is temporarily stored in the gateway. The simplified task template data is distributed to the digital certificate processing service devices. In this way, communication load can be reduced, a time for obtaining the latest task template data can be shortened, the volume of data to be transmitted over a network can be reduced, and a data delay can be reduced.

In some embodiments, the generating simplified task template data of a digital certificate processing task based on the digital certificate processing task template data includes: extracting, from the digital certificate processing task template data, a field required for digital certificate processing task data, where the field includes a task list; constructing a Merkle tree of digital certificate transaction data based on the task list; computing a left tree hash list of the Merkle tree; generating a block initial digital certificate transaction; and generating the simplified task template data based on the left tree hash list and the block initial digital certificate transaction.

In some embodiments, the method further includes: generating block data in response to simplified block submission information, and submitting the block data to the digital certificate processing node.

In some embodiments, the generating block data in response to simplified block submission information, and submitting the block data to the digital certificate processing node includes: obtaining block header information in the simplified block submission information; adding transaction data based on the block header information; and submitting assembly information of the block header information and the transaction data to the digital certificate processing node.

In some embodiments, the method further includes: obtaining registration information of the digital certificate processing service device, and establishing a connection to the digital certificate processing service device based on the registration information.

To achieve the second objective, a gateway according to an embodiment of a second aspect of the present application provides includes: an obtaining module configured to poll a digital certificate processing node to obtain latest digital certificate processing task template data; a first generation module configured to generate simplified task template data of a digital certificate processing task based on the digital certificate processing task template data; and a first sending module configured to distribute the simplified task template data to a digital certificate processing service device.

The gateway according to this embodiment of the present application is provided between the digital certificate processing service device and the digital certificate processing node. The gateway obtains the digital certificate processing template data from the digital certificate processing node, converts the digital certificate processing template data into the simplified task template data, and delivers and transmits only data necessary for digital certificate processing tasks. In this way, computational load and network load of the digital certificate processing node and the digital certificate processing service device can be reduced, a delay of data transmission can be reduced, and a time for obtaining the latest digital certificate processing task can be shortened.

In some embodiments, the first generation module further includes: an extraction unit configured to extract, from the digital certificate processing task template data, a field required for digital certificate processing task data, where the field includes a task list; a construction unit configured to construct a Merkle tree of digital certificate transaction data based on the task list; a computing unit configured to compute a left tree hash list of the Merkle tree; a first generation unit configured to generate a block initial digital certificate transaction; and a second generation unit configured to generate the simplified task template data based on the left tree hash list and the digital certificate transaction.

In some embodiments, the gateway further includes a block submission module, configured to generate block data in response to simplified block submission information, and submit the block data to the digital certificate processing node.

In some embodiments, the block submission module further includes: an obtaining unit configured to obtain block header information in the simplified block submission information; an addition unit configured to add transaction data based on the block header information; and a submission unit configured to submit assembly information of the block header information and the transaction data to the digital certificate processing node.

In some embodiments, the gateway further includes: a registration and connection module configured to obtain registration information of the digital certificate processing device, and establish a connection to the digital certificate processing service device based on the registration information.

To achieve the third objective, a distributed digital certificate processing method according to an embodiment of a third aspect of the present application, which is applied to a gateway, includes: determining whether simplified block submission information is received; and generating block data in response to the simplified block submission information, and submitting the block data to the digital certificate processing node.

According to the distributed digital certificate processing method in this embodiment of the present application, the gateway is provided between a digital certificate processing node and a digital certificate processing service device. The gateway generates the block data after receiving the simplified block submission information, and submits the block data to the digital certificate processing node. In this way, a block submission procedure can be implemented, the volume of data to be transmitted can be reduced, and the transmission efficiency can be improved.

In some embodiments, the generating block data in response to the simplified block submission information, and submitting the block data to the digital certificate processing node includes: obtaining block header information in the simplified block submission information; adding transaction data based on the block header information; and submitting assembly information of the block header information and the transaction data to the digital certificate processing node.

To achieve the fourth objective, a gateway according to an embodiment of a fourth aspect of the present application includes: a determination module configured to determine whether simplified block submission information is received; and a block submission module configured to generate block data in response to the simplified block submission information, and submit the block data to the digital certificate processing node.

The gateway according to this embodiment of the present application is provided between the digital certificate processing node and a digital certificate processing service device. The gateway generates the block data after receiving the simplified block submission information sent by the digital certificate processing service device, and submits the block data to the digital certificate processing node. In this way, a block submission procedure can be implemented, the volume of data to be transmitted can be reduced, and the transmission efficiency can be improved.

In some embodiments, the block submission module further includes: an obtaining unit configured to obtain block header information in the simplified block submission information; an addition unit configured to add transaction data based on the block header information; and a submission unit configured to submit assembly information of the block header information and the transaction data to the digital certificate processing node.

To achieve the fifth objective, a gateway according to an embodiment of a fifth aspect of the present application includes: at least one first processor; and a first memory communicatively connected to the at least one processor, where the memory stores instructions executable by the at least one first processor, the instructions, when executed by the at least one first processor, causing the at least one first processor to perform the distributed digital certificate processing methods in the foregoing embodiments of the first aspect and the third aspect.

To achieve the sixth objective, a distributed digital certificate processing method according to an embodiment of a sixth aspect of the present application, which is applied to a digital certificate processing service device, includes: receiving simplified task template data of a digital certificate processing task; generating a digital certificate processing task based on the simplified task template data; and distributing the digital certificate processing task to a digital certificate processing device.

According to the distributed digital certificate processing method in this embodiment of the present application, the simplified task template data is obtained, and the digital certificate processing task is generated based on the simplified task template data. Data unnecessary for the digital certificate processing task is removed to obtain the simplified task template data. In this way, computational load and communication load of the digital certificate processing service device can be reduced, and a delay of data transmission can be reduced.

In some embodiments, the method further includes: receiving share information sent by the digital certificate processing device; verifying whether a block header constructed based on the share information meets a block submission criterion; and sending simplified block submission information to a gateway if the block header meets the block submission criterion.

To achieve the seventh objective, a digital certificate processing service device according to an embodiment of a seventh aspect of the present application includes: a first receiving module configured to receive simplified task template data of a digital certificate processing task; a second generation module configured to generate a digital certificate processing task based on the simplified task template data; and a second sending module configured to distribute the digital certificate processing task to a digital certificate processing device.

The digital certificate processing service device according to this embodiment of the present application receives the simplified task template data, and generates the digital certificate processing task based on the simplified task template data. Data unnecessary for the digital certificate processing task is removed to obtain the simplified task template data. In this way, computational load and communication load of the digital certificate processing service device can be reduced, and a delay of data transmission can be reduced.

In some embodiments, the digital certificate processing service device further includes: a second receiving module configured to receive share information sent by the digital certificate processing device; a verification module configured to verify whether a block header constructed based on the share information meets a block submission criterion; and a third sending module configured to send simplified block submission information to a gateway if the share information meets the block submission criterion.

To achieve the eighth objective, a digital certificate processing service device according to an embodiment of an eighth aspect of the present application includes: at least one second processor; and a second memory communicatively connected to the at least one second processor, where the memory stores instructions executable by the at least one second processor, the instructions, when executed by the at least one second processor, causing the at least one second processor to perform the distributed digital certificate processing method in the foregoing embodiment of the sixth aspect.

To achieve the ninth objective, a distributed digital certificate processing system according to an embodiment of a ninth aspect of the present application includes: a digital certificate processing node; a gateway in the foregoing embodiment, the gateway being connected to the digital certificate processing node; a digital certificate processing service device in the foregoing embodiment, the digital certificate processing service device being connected to the gateway; and a digital certificate processing device, the digital certificate processing device being connected to the digital certificate processing service device.

According to the distributed digital certificate processing system in this embodiment of the present application, the gateway is provided between the digital certificate processing node and the digital certificate processing service device. The gateway polls the digital certificate processing node, generates simplified task template data, and sends the simplified task template data to the digital certificate processing service device to generate a digital certificate processing task. In this way, computational load and communication load of the digital certificate processing node and the digital certificate processing service device can be reduced, a delay of data transmission can be reduced, and a time for obtaining the digital certificate processing task can be shortened.

An embodiment of a tenth aspect of the present application provides a computer-readable storage medium storing computer-executable instructions, where the computer-executable instructions are configured to perform the distributed digital certificate processing method in the foregoing embodiment.

An embodiment of an eleventh aspect of the present application provides a computer program product including a computer program stored on a computer-readable storage medium, where the computer program includes program instructions that, when executed by a computer, cause the computer to perform the distributed digital certificate processing method in the foregoing embodiment.

Additional aspects and advantages of the present invention will be set forth in part in the following description, which will be in part apparent from the following description, or may be learned by practice of the present invention.

### Brief Description of the Drawings

One or more embodiments are exemplarily illustrated by means of corresponding accompanying drawings thereof, the exemplary illustration and accompanying drawings do not constitute a limitation on the embodiments. Elements having the same reference numerals in the accompanying drawings represent similar elements, and the accompanying drawings do not constitute a limitation in terms of scale, in which:
FIG. 1 is a flowchart of a distributed digital certificate processing method according to an embodiment of the present application;
FIG. 2 is a schematic diagram of a distributed digital certificate processing process according to an embodiment of the present application;
FIG. 3 is a block diagram of a gateway according to an embodiment of the present application;
FIG. 4 is a block diagram of a gateway according to another embodiment of the present application;
FIG. 5 is a block diagram of a gateway according to still another embodiment of the present application;
FIG. 6 is a block diagram of a gateway according to yet another embodiment of the present application;
FIG. 7 is a flowchart of a block submission procedure in a distributed digital certificate processing method according to an embodiment of the present application;
FIG. 8 is a block diagram of a gateway according to an embodiment of the present application;
FIG. 9 is a block diagram of a gateway according to another embodiment of the present application;
FIG. 10 is a block diagram of a gateway according to still another embodiment of the present application;
FIG. 11 is a block diagram of a gateway according to yet another embodiment of the present application;
FIG. 12 is a flowchart of a distributed digital certificate processing method according to an embodiment of the present application;
FIG. 13 is a block diagram of a digital certificate processing service device according to an embodiment of the present application;
FIG. 14 is a block diagram of a digital certificate processing service device according to another embodiment of the present application;
FIG. 15 is a block diagram of a digital certificate processing service device according to still another embodiment of the present application; and
FIG. 16 is a block diagram of a distributed digital certificate processing system according to an embodiment of the present application.

### Detailed Description of Embodiments

To understand features and technical contents of embodiments of the present application in more detail, the implementation of the embodiments of the present application will be described below in detail with reference to the accompanying drawings, which are for reference and illustration only, and are not intended to limit the embodiments of the present application. In the following technical description, for convenience of explanation, numerous details are set forth to provide a thorough understanding of the disclosed embodiments. However, one or more embodiments can still be implemented without these details. In other cases, to simplify the drawings, well-known structures and apparatuses may be shown in a simplified manner.

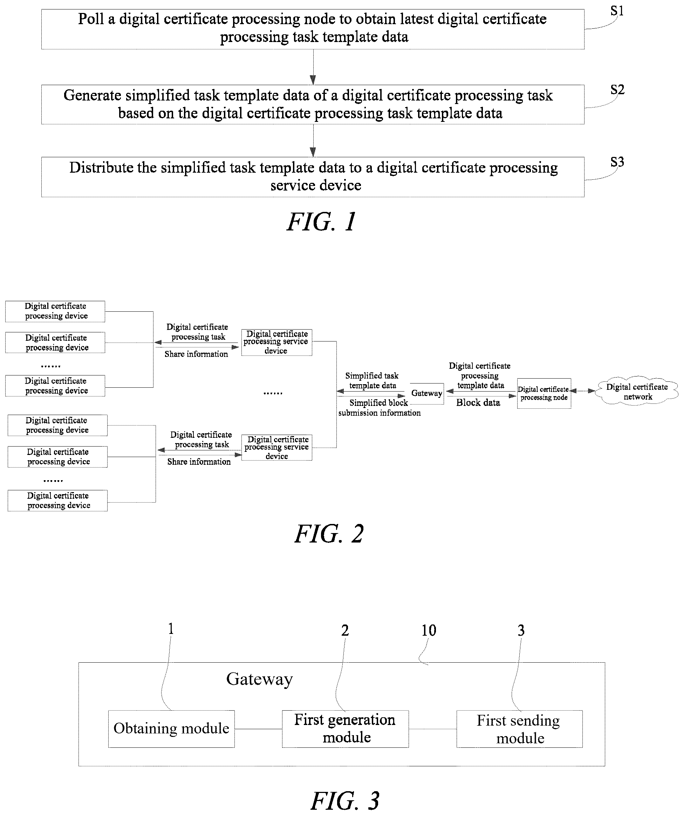

A distributed digital certificate processing method according to an embodiment of a first aspect of the present application is described below with reference to FIG. 1 and FIG. 2.

FIG. 1 is a flowchart of a distributed digital certificate processing method according to an embodiment of the present application. As shown in FIG. 1, the distributed digital certificate processing method in this embodiment of the present application includes steps S1, S2, and S3. In this embodiment, the method can be applied to a gateway and implemented by the gateway.

Step S1: Poll a digital certificate processing node to obtain latest digital certificate processing task template data.

In this embodiment of the present application, the gateway is added between a digital certificate processing service device and a digital certificate processing node. For example, the gateway is connected to the digital certificate processing node and a plurality of digital certificate processing service devices. The gateway polls the digital certificate processing node to obtain the digital certificate processing task template data.

In this embodiment, the digital certificate processing task template data may include task content, difficulty information, transaction data having a large data volume, and other related data, where the large volume data is data, such as transaction data, that is unnecessary for a digital certificate processing task of a digital certificate processing device.

Specifically, the gateway polls the digital certificate processing node to obtain the digital certificate processing task template data, and then verifies whether the template data is the latest digital certificate processing task template data. For example, the verification may be based on the sequence of time when the data is obtained or the sequence of time when the data is temporarily stored.

Step S2: Generate simplified task template data of a digital certificate processing task based on the digital certificate processing task template data.

In this embodiment, the simplified task template data may include data, such as task content and difficulty information, necessary for the digital certificate processing task, and some unnecessary data such as transaction data having a large data volume is removed. Such transaction data may be temporarily stored in the gateway. The simplified task template data is obtained by removing data unnecessary for the digital certificate processing task from the digital certificate processing task template data.

Step S3: Distribute the simplified task template data to a digital certificate processing service device.

Specifically, a gateway is added between the digital certificate processing node and a plurality of digital certificate processing service devices. The gateway polls the digital certificate processing node to obtain the digital certificate processing template data, and removes, from the digital certificate processing template data, data having a large data volume and unnecessary for digital certificate processing, so as to obtain the simplified task template data. In other words, only data necessary for the digital certificate processing is delivered and transmitted to the digital certificate processing service devices. Then the digital certificate processing service devices generate digital certificate processing tasks based on the simplified task template data, and distribute the digital certificate processing tasks to digital certificate processing devices.

In other words, a digital certificate processing service is divided into two parts. In one part, the gateway obtains the simplified task template data, and in the other part, the digital certificate processing service devices generate the digital certificate processing tasks and distribute the tasks to the digital certificate processing devices. The plurality of digital certificate processing service devices do not need to poll the digital certificate processing node. A main network communication mode is switched from a polling mode to a notification mode.

In some embodiments, the digital certificate processing device performs digital certificate-related data processing, through which a digital certificate can be obtained. Further, when the digital certificate is related to or embodied as cryptocurrency, the digital certificate processing device in this embodiment of the present application may be a blockchain computing device, and the digital certificate may be cryptocurrency based on blockchain technology.

According to the distributed digital certificate processing method in this embodiment of the present application, the gateway polls the digital certificate processing node, which can reduce computational load and network load of the digital certificate processing node and the plurality of digital certificate processing service devices, in comparison with the prior art in which the plurality of digital certificate processing service devices each read large volume data from the digital certificate processing node frequently. In addition, the digital certificate processing task template data is converted into the simplified task template data, and the data unnecessary for the digital certificate processing task, especially the transaction data having a large data volume, is temporarily stored in the gateway. The simplified task template data is distributed to the digital certificate processing service devices. In this way, communication load can be reduced, a time for obtaining the latest task template data can be shortened, the volume of data to be transmitted over a network can be reduced, and a data delay can be reduced.

Further, in some embodiments, the process of generating simplified task template data of a digital certificate processing task may include: extracting, from the digital certificate processing task template data, a field required for digital certificate processing task data, such as a version, ntime, a hash value of a previous block, nbits, and a task list; constructing a Merkle tree of digital certificate transaction data based on the task list; computing a left tree hash list of the Merkle tree; generating a block initial digital certificate transaction, such as a Coinbase transaction; and generating the simplified task template data based on the above-mentioned data, where the above-mentioned data includes the left tree hash list and the block initial digital certificate transaction, and may also include the information such as the hash value of the previous block, nbits, and the version, and delivering the simplified task template data to the digital certificate processing service device. In other words, the transaction data having a large data volume is temporarily stored in the gateway, and only the left tree of the Merkle tree of transaction hashes. In this way, a data volume for the digital certificate processing service device is reduced from several megabytes to tens of megabytes, thereby greatly reducing the communication load, and shortening a time for obtaining the latest digital certificate processing task.

For example, FIG. 2 is a schematic diagram of a distributed digital certificate processing system according to an embodiment of the present application. As shown in FIG. 2, a digital certificate processing service is divided into two parts, including digital certificate processing service devices and a gateway. The gateway is connected to a digital certificate processing node, and the digital certificate processing node is connected to a digital certificate network. The digital certificate processing service devices each are connected to a plurality of digital certificate processing devices. The gateway is responsible for polling a remote procedure call (RPC) service of the digital certificate processing node to obtain latest digital certificate processing task template data, generates simplified task template data by removing, from the digital certificate processing task template data, data unnecessary for digital certificate processing tasks, such as transaction data having a large data volume, and actively distributes the simplified task template data to all the digital certificate processing service devices connected thereto. The digital certificate processing service devices process the received simplified task template data and then add other data to the simplified task template data to generate digital certificate processing tasks, and distribute the digital certificate processing tasks to the digital certificate processing devices. The other data added may include information such as a watermark of a mining pool and a node identifier, and the watermark may be used to identify that the data block is processed by the mining pool.

In some embodiments, the gateway can establish a connection to the digital certificate processing service devices by means of a registration mechanism. Specifically, each gateway has its own gateway identification number, and assigns a service identification number to each digital certificate processing service device. During the establishment of a connection, the gateway obtains registration information of the digital certificate processing service device and identifies whether the registration information is valid. When the registration information is valid, the gateway establishes a connection to the digital certificate processing service device based on the registration information. The registration information may be required the first time when the gateway establishes a connection to the digital certificate processing service device, and may be not required later, unless the connection is interrupted and needs to be re-established.

In this embodiment, the distributed digital certificate processing method according to this embodiment of the present application further includes a block submission procedure, in which the gateway generates block data after receiving the simplified block submission information, and submits the block data to the digital certificate processing node. Because the transaction data is stored in the gateway, the simplified block submission information does not include the transaction data, and the volume of data to be transmitted can be reduced, improving the transmission efficiency.

Specifically, as shown in FIG. 2, after receiving the digital certificate processing task, the digital certificate processing device performs computation based on the digital certificate processing task, and submits, upon obtaining an answer to the digital certificate processing task, a share to the digital certificate processing service device. The digital certificate processing service device verifies the share information. If a difficulty of the digital certificate processing task is satisfied, a corresponding effort of the digital certificate processing device is calculated. If a block header constructed based on the share information satisfies a block submission criterion, the digital certificate processing service device submits the simplified block submission information to the gateway, where the simplified block submission information may include block header information. After receiving the simplified block submission information, the gateway obtains the block header information in the simplified block submission information, and adds the transaction data based on the block header information, where the transaction data has been temporarily stored in the gateway in a digital certificate processing task generation procedure. The gateway assembles the block header information and the transaction data, and submits assembly information of the block header information and the transaction data to the digital certificate processing node, for block submission by means of an RPC service of the digital certificate processing node.

Generally, according to the distributed digital certificate processing method in this embodiment of the present application, a communication process of large volume network data is performed by the gateway alone, and only data necessary for digital certificate processing tasks is delivered and transmitted, while data having a large data volume and unnecessary for the digital certificate processing tasks are not delivered and transmitted. In this way, computational load and network load of the digital certificate processing node and the digital certificate processing service devices can be reduced, a delay of data transmission can be reduced, and a time for obtaining the latest digital certificate processing task can be shortened.

For a large-scale distributed digital certificate processing system serving a large number of digital certificate processing devices and deployed with a large number of digital certificate processing service devices, the use of the distributed digital certificate processing method of the present application produces a more remarkable effect.

A gateway according to an embodiment of a second aspect of the present application is described below with reference to the accompanying drawings.

FIG. 3 is a block diagram of a gateway according to an embodiment of the present application. As shown in FIG. 3, the gateway 10 according to this embodiment of the present application includes an obtaining module 1, a first generation module 2, and a first sending module 3.

The obtaining module 1 is configured to poll a digital certificate processing node to obtain latest digital certificate processing task template data. The first generation module 2 is configured to generate simplified task template data of a digital certificate processing task based on the digital certificate processing task template data. The first sending module 3 is configured to distribute the simplified task template data to a digital certificate processing service device.

Specifically, the gateway 10 in this embodiment of the present application is connected to the digital certificate processing node and a plurality of digital certificate processing service devices. The obtaining module 1 polls the digital certificate processing node to obtain the latest digital certificate processing template data, which can reduce computational load and communication load of the digital certificate processing node, in comparison with the plurality of digital certificate processing service devices each polling the digital certificate processing node, where the digital certificate processing template data includes large volume data unnecessary for the digital certificate processing task, such as transaction data having a large data volume. The first generation module 2 converts, by filtering out and temporarily storing the data unnecessary for the digital certificate processing task, the digital certificate processing template data into the simplified task template data. The first sending module 3 distributes the simplified task template data to the digital certificate processing service devices, that is, delivers and transmits only data necessary for digital certificate processing to the digital certificate processing service devices. Then, the digital certificate processing service devices generate digital certificate processing tasks based on the simplified task template data, and distribute the digital certificate processing tasks to digital certificate processing devices. In this way, the volume of data communicated with the digital certificate processing service devices can be reduced, computational load and communication load of the digital certificate processing service devices can be reduced, and the volume of data to be transmitted can be greatly reduced, and a delay of data transmission can be reduced.

In this embodiment, the gateway polls the digital certificate processing node to obtain the digital certificate processing task template data, and then verifies whether the template data is the latest digital certificate processing task template data. For example, the verification may be based on the sequence of time when the data is obtained or the sequence of time when the data is temporarily stored.

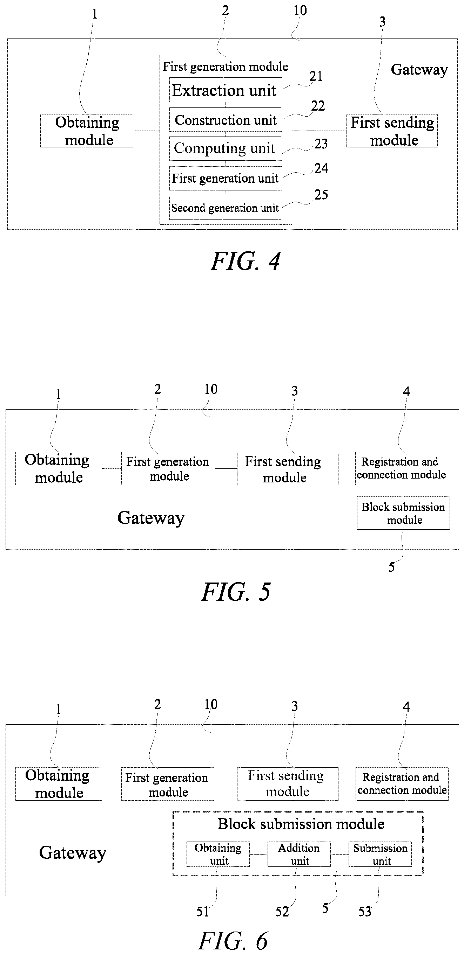

Further, in some embodiments, as shown in FIG. 4, the first generation module 2 further includes an extraction unit 21, a construction unit 22, a computing unit 23, a first generation unit 24, and a second generation unit 25.

The extraction unit 21 is configured to extract, from the digital certificate processing task template data, a field required for digital certificate processing task data, such as version, ntime, a hash value of a previous block, nbits, and a task list. The construction unit 22 is configured to construct a Merkle tree of digital currency transaction data based on the task list. The Merkle tree is a binary tree that stores transaction information. In the present application, the computing unit 23 is configured to compute a left tree hash list of the Merkle tree. The first generation unit 24 is configured to generate a block initial digital certificate transaction. The second generation unit 25 is configured to generate the simplified task template data based on the above-mentioned data, and deliver the simplified task template data to the digital certificate processing service device, where the above-mentioned data includes the left tree hash list and the block initial digital certificate transaction, and may include the information such as the information about the previous block, nbits, and the version.

In some embodiments, the gateway can establish a connection to the digital certificate processing service devices by means of a registration mechanism. As shown in FIG. 5, the gateway 10 in this embodiment of the present application further includes a registration and connection module 4. The registration and connection module 4 is configured to obtain registration information of the digital certificate processing device, and establish a connection to the digital certificate processing service device based on the registration information. Specifically, the gateway 10 has its own gateway identification number, and assigns a service identification number to each digital certificate processing service device. During the establishment of a connection, the gateway 10 obtains registration information of the digital certificate processing service device by using the registration and connection module 4 and identifies whether the registration information is valid. When the registration information is valid, the gateway establishes a connection to the digital certificate processing service device based on the registration information. The registration information may be required the first time when the gateway establishes a connection to the digital certificate processing service device, and an automatic connection may be established later, unless the connection is interrupted and needs to be re-established.

In this embodiment, as shown in FIG. 5, the gateway 10 in this embodiment of the present application further includes a block submission module 5. The block submission module 5 is configured to generate block data in response to simplified block submission information, and submit the block data to the digital certificate processing node, where the simplified block submission information does not include the transaction data. Therefore, the volume of data to be transmitted can be reduced, and the data transmission efficiency can be improved.

Specifically, as shown in FIG. 2, after receiving the digital certificate processing task, the digital certificate processing device performs computation based on the digital certificate processing task, and submits, upon obtaining an answer to the digital certificate processing task, a share to the digital certificate processing service device. The digital certificate processing service device verifies a block header constructed based on the share information. If a difficulty of the digital certificate processing task is satisfied, a corresponding effort of the digital certificate processing device is calculated. If the block header constructed based on the share information satisfies a block submission criterion, the digital certificate processing service device submits the simplified block submission information to the gateway 10. The simplified block submission information may include block header information. As shown in FIG. 6, the block submission module 5 further includes an obtaining unit 51, an addition unit 52, and a submission unit 53. The obtaining unit 51 is configured to obtain block header information in the simplified block submission information. The addition unit 52 is configured to add transaction data based on the block header information, where the transaction data has been temporarily stored in the gateway 10 in a digital certificate processing task generation procedure, and the addition unit 52 assembles the block header information and the transaction data. The submission unit 53 is configured to submit assembly information of the block header information and the transaction data to the digital certificate processing node, for block submission by means of an RPC service of the digital certificate processing node.

In short, the gateway 10 of the present application is provided between the digital certificate processing service devices and the digital certificate processing node. The gateway 10 obtains the digital certificate processing template data, converts the digital certificate processing template data into the simplified task template data, and delivers and transmits only data necessary for digital certificate processing tasks. In this way, computational load and network load of the digital certificate processing node and the digital certificate processing service devices can be reduced, a delay of data transmission can be reduced, and a time for obtaining the latest digital certificate processing task can be shortened. For a large-scale distributed digital certificate processing system serving a large number of digital certificate processing devices and deployed with a large number of digital certificate processing service devices, the use of the gateway 10 of the present application produces a more remarkable effect.

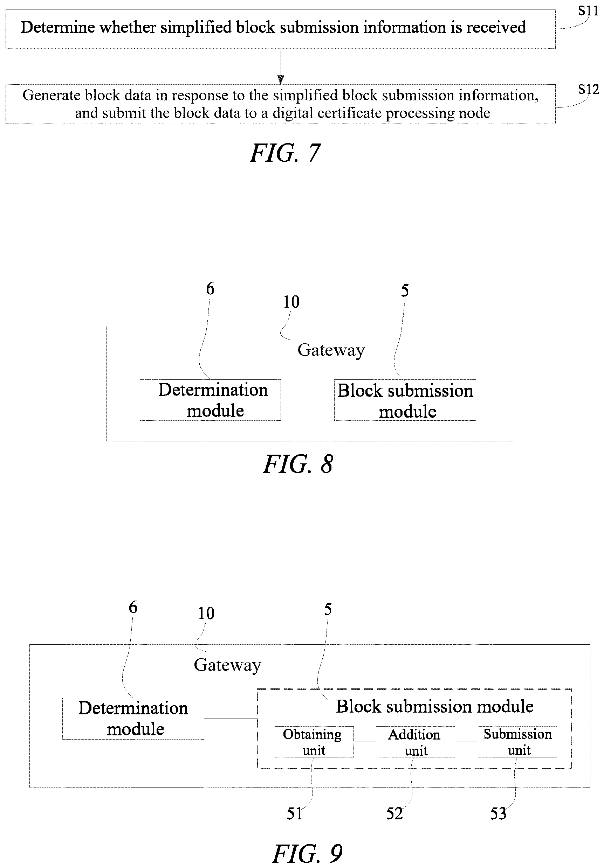

A distributed digital certificate processing method according to an embodiment of a third aspect of the present application is described below with reference to FIG. 7.

FIG. 7 is a flowchart of a distributed digital certificate processing method according to an embodiment of the present application. In this embodiment, a gateway is added between a digital certificate processing service device and a digital certificate processing node. For example, the gateway is connected to the digital certificate processing node and a plurality of digital certificate processing service devices. The distributed digital credential processing method in this embodiment of this aspect can be implemented at the gateway side.

As shown in FIG. 7, the distributed digital certificate processing method according to this embodiment of the present application includes steps S11 and S12.

Step S11: Determine whether simplified block submission information is received.

Specifically, after receiving a digital certificate processing task, the digital certificate processing device performs computation based on the digital certificate processing task, and submits, upon obtaining an answer to the digital certificate processing task, a share to the digital certificate processing service device. The digital certificate processing service device performs assembling based on a miner identifier, a service setting identifier, etc. to obtain a complete block initial digital certificate transaction, constructs a complete Merkle tree based on a left tree of a Merkle tree, computes a root hash value of the Merkle tree to construct a complete block header, and verifies the block header. If a difficulty of the digital certificate processing task is satisfied, a corresponding effort of the digital certificate processing device is calculated. If the block header constructed based on the share information satisfies a block submission criterion, the digital certificate processing service device submits the simplified block submission information to the gateway.

Step S12: Generate block data in response to the simplified block submission information, and submit the block data to a digital certificate processing node.

Specifically, the simplified block submission information may include block header information. After receiving the block header information, the gateway adds transaction data based on the block header information, where the transaction data has been temporarily stored in the gateway in a digital certificate processing task generation procedure. The gateway assembles the block header information and the transaction data, and submits assembly information of the block header information and the transaction data to the digital certificate processing node, for block submission by means of an RPC service of the digital certificate processing node.

According to the distributed digital certificate processing method in this embodiment of the present application, the gateway is provided between the digital certificate processing node and the digital certificate processing service device. The gateway generates the block data after receiving the simplified block submission information, and submits the block data to the digital certificate processing node, thereby implementing a block submission procedure. In addition, the gateway assembles the block header information and the transaction data to generate the block data, and then submits the block data to the digital certificate processing node. In this way, the volume of data to be transmitted can be reduced, and a delay of data transmission can be reduced.

A gateway according to an embodiment of a fourth aspect of the present application is described below with reference to FIG. 8 and FIG. 9.

FIG. 8 is a block diagram of a gateway according to an embodiment of the present application. As shown in FIG. 8, the gateway 10 according to this embodiment of the present application includes a determination module 6 and a block submission module 5.

The determination module 6 is configured to determine whether simplified block submission information is received. The block submission module 5 is configured to generate block data in response to the simplified block submission information, and submit the block data to a digital certificate processing node, for block submission by means of an RPC service of the digital certificate processing node.

Further, the block submission information may include block header information. As shown in FIG. 9, the block submission module 5 may include an obtaining unit 51, an addition unit 52, and a submission unit 53. The receiving unit 51 is configured to obtain block header information in the simplified block submission information. The addition unit 52 is configured to add transaction data based on the block header information. The submission unit 53 is configured to submit assembly information of the block header information and the transaction data to the digital certificate processing node, for block submission by means of an RPC service of the digital certificate processing node.

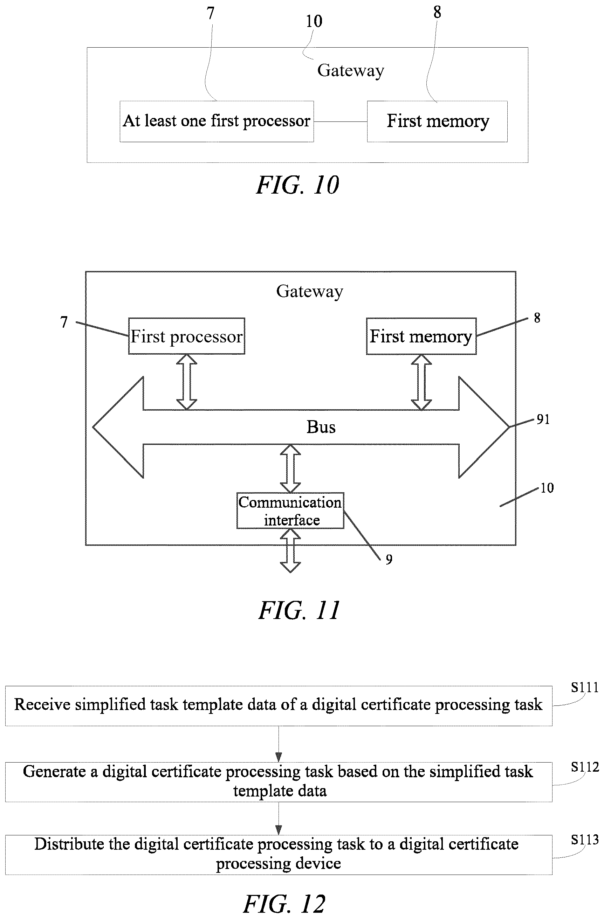

A gateway according to an embodiment of a fifth aspect of the present application is described below with reference to FIG. 10.

FIG. 10 is a block diagram of a gateway according to an embodiment of the present application. As shown in FIG. 10, the gateway 10 according to the present application includes at least one first processor 7, and a first memory 8 communicatively connected to the at least one first processor 7. The first memory 8 stores instructions executable by the at least one first processor 7, the instructions, when executed by the at least one first processor 7, causing the at least one first processor 7 to perform the distributed digital certificate processing method in the embodiment of the foregoing aspect.

In FIG. 11, taking one first processor 7 and a first memory 8 as an example, a communication interface 9 and a bus 91 may further be included. The first processor 7, the communication interface 9, and the first memory 8 can communicate with each other through the bus 91. The communication interface 9 can be used for information transmission. The first processor 7 can call logical instructions in the first memory 8 to perform the distributed digital certificate processing method in the foregoing embodiment.

In addition, the logical instructions in the first memory 8 can be stored in a computer-readable storage medium when implemented in the form of a software functional unit and sold or used as an independent product.

As a computer-readable storage medium, the first memory 8 may be used to store a software program and a computer-executable program, such as program instructions/modules corresponding to the methods in the embodiments of the present application. The first processor 7 executes functional applications and data processing by running the software program, instructions, and modules stored in the first memory 8, that is, implements the method of transferring a digital certificate processing task in the foregoing method embodiments.

The first memory 8 may include a program storage area and a data storage area, where the program storage area may store an operating system, and an application program required by at least one function; and the data storage area may store data created based on the use of a terminal device, etc. In addition, the first memory 8 may include a high-speed random access memory, and may further include a non-volatile memory.

A distributed digital certificate processing method according to an embodiment of a sixth aspect of the present application is described below with reference to FIG. 12.

In this embodiment, a gateway is provided between a digital certificate processing service device and a digital certificate processing node, and the distributed digital certificate processing method in this embodiment of this aspect can be implemented at the digital certificate processing service device side.

FIG. 12 is a flowchart of a distributed digital certificate processing method according to an embodiment of the present application. As shown in FIG. 12, the method in this embodiment of the present application includes steps S111, S112, and S113.

Step Sill: Receive simplified task template data of a digital certificate processing task.

Specifically, the gateway is provided between the digital certificate processing service device and the digital certificate processing node. The gateway polls the digital certificate processing node to obtain latest digital certificate processing task template data, converts, by filtering out data unnecessary for a digital certificate processing task, the digital certificate processing task template data into simplified task template data, and distributes the simplified task template data to the digital certificate processing service device connected thereto. That is, the simplified task template data includes data, such as task content and difficulty information, necessary for the digital certificate processing task, and some unnecessary data such as transaction data having a large data volume is removed. Such transaction data may be temporarily stored in the gateway.

Step S112: Generate a digital certificate processing task based on the simplified task template data.

Specifically, the digital certificate processing service device processes the received simplified task template data and adds other data to the simplified task template data to generate a complete block initial digital certificate transaction task and the digital certificate processing task. The other data added may include information such as a watermark of a mining pool and a node identifier, and the watermark may be used to identify that the data block is processed by the digital certificate processing node.

Step S113: Distribute the digital certificate processing task to a digital certificate processing device.

According to the distributed digital certificate processing method in this embodiment of the present application, the simplified task template data is obtained, and the digital certificate processing task is generated based on the simplified task template data. Data unnecessary for the digital certificate processing task is removed to obtain the simplified task template data. In this way, computational load and communication load of the digital certificate processing service device can be reduced, and a delay of data transmission can be reduced.

Further, after receiving the digital certificate processing task, the digital certificate processing device performs computation based on the digital certificate processing task, and submits, upon obtaining an answer satisfying a condition of the digital certificate processing task, share information to the digital certificate processing service device. The digital certificate processing service device receives the share information sent by the digital certificate processing device, verifies whether a block header constructed based on the share information meets a block submission criterion, and sends simplified block submission information to the gateway if the block header meets the block submission criterion. Then, the gateway generates block data in response to the simplified block submission information, and submits the block data to the digital certificate processing node, for block submission by means of an RPC service of the digital certificate processing node, thereby implementing a block submission procedure.

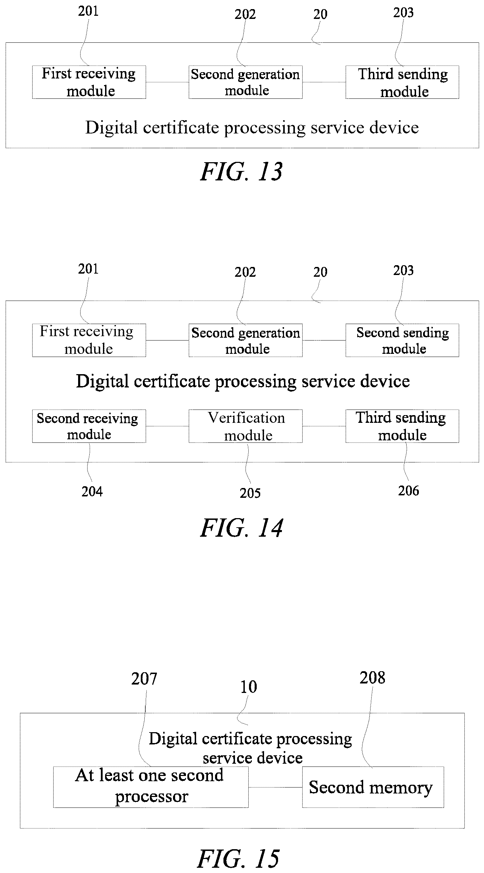

A digital certificate processing service device according to an embodiment of a seventh aspect of the present application is described below with reference to FIG. 13 and FIG. 14.

FIG. 13 is a block diagram of a digital certificate processing service device according to an embodiment of the present application. As shown in FIG. 13, the digital certificate processing service device 20 in this embodiment of the present application includes a first receiving module 201, a second generation module 202, and a second sending module 203.

The first receiving module 201 is configured to receive simplified task template data of a digital certificate processing task. The second generation module 202 is configured to generate a digital certificate processing task based on the simplified task template data. The second sending module 203 is configured to distribute the digital certificate processing task to a digital certificate processing device.

The digital certificate processing service device 20 according to this embodiment of the present application receives the simplified task template data, and generates the digital certificate processing task based on the simplified task template data. Data unnecessary for the digital certificate processing task is removed to obtain the simplified task template data. In this way, computational load and communication load of the digital certificate processing service device can be reduced, and a delay of data transmission can be reduced.

Further, as shown in FIG. 14, the digital certificate processing service device 20 in this embodiment of the present application further includes a second receiving module 204, a verification module 205, and a third sending module 206. The second receiving module 204 is configured to receive share information sent by the digital certificate processing device. The verification module 205 is configured to verify whether a block header constructed based on the share information meets a block submission criterion. Specifically, the verification module 205 performs assembling based on a miner identifier, a service setting identifier, etc. to obtain a complete block initial digital certificate transaction, constructs a complete Merkle tree based on a left tree of a Merkle tree, computes a root hash value of the Merkle tree to construct a complete block header, and verifies the block header. The third sending module 206 is configured to send simplified block submission information to a gateway if the block header meets the block submission criterion. Then, the gateway generates block data in response to the simplified block submission information, and submits the block data to a digital certificate processing node, for block submission by means of an RPC service of the digital certificate processing node, thereby implementing a block submission procedure.

A digital certificate processing service device according to an embodiment of an eighth aspect of the present application is described below with reference to FIG. 15.

As shown in FIG. 15, the digital certificate processing service device 20 in this embodiment of the present application includes at least one second processor 207, and a second memory 208 communicatively connected to the at least one second processor 207. The second memory 208 stores instructions executable by the at least one second processor 207, the instructions, when executed by the at least one second processor 207, causing the at least one second processor 207 to perform the distributed digital certificate processing method in the foregoing embodiment of the sixth aspect.

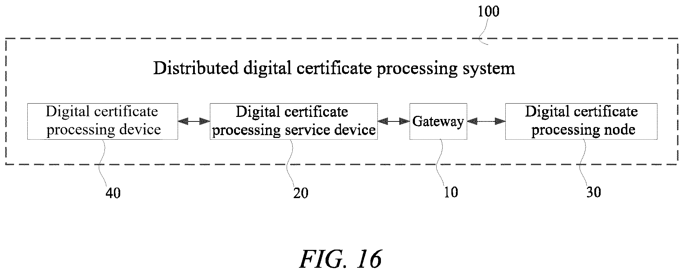

Based on the digital certificate processing service device and the gateway in the foregoing embodiments, a distributed digital certificate processing system according to an embodiment of a ninth aspect of the present application is described below with reference to FIG. 16.

As shown in FIG. 16, the distributed digital certificate processing system 100 in this embodiment of the present application includes a digital certificate processing node 30, the gateway 10 and the digital certificate processing service device 20 in the above embodiments, and a digital certificate processing device 40.

The gateway 10 is connected to the digital certificate processing node 30, and the digital certificate processing service device 20 is connected to the gateway 10. The digital certificate processing device 40 is connected to the digital certificate processing service device 20.

Specifically, with reference to FIG. 2, the distributed digital certificate processing system 100 in this embodiment of the present application is based on the gateway 10 provided between the digital certificate processing node 30 and the digital certificate processing service devices 20, and a digital certificate processing service thereof may include a task delivery procedure and a block submission procedure.

The task delivery procedure may include the following: The gateway 10 polls the digital certificate processing node 30 to obtain latest digital certificate processing template data, generates simplified task template data of a digital certificate processing task based on the digital certificate processing template data, and distributes the simplified task template data to the digital certificate processing service device 20 connected thereto, where data, such as transaction data having a large data volume, unnecessary for the digital certificate processing task is removed and is temporarily stored in the gateway 10. The digital certificate processing service device 20 generates a digital certificate processing task based on the received simplified task template data, and distributes the digital certificate processing task to the digital certificate processing device 40.

The block submission procedure may include the following: The digital certificate processing device 40 performs computation based on the digital certificate processing task, and the digital certificate processing device 40 submits, upon obtaining an answer satisfying the digital certificate processing task, share information to the digital certificate processing service device 20. The digital certificate processing service device 20 performs assembling based on the share information to obtain a block header and verifies the block header. If the block header satisfies a block submission criterion, the digital certificate processing service device generates simplified block submission information and reports the simplified block submission information to the gateway 10. The gateway 10 generates block data in response to the simplified block submission information, and submits the block data to the digital certificate processing node 30, for block submission by means of an RPC service of the digital certificate processing node 30, thereby implementing the block submission procedure.

According to the distributed digital certificate processing system 100 in this embodiment of the present application, the gateway 10 is provided between the digital certificate processing node 30 and the digital certificate processing service device 20. The gateway polls the digital certificate processing node 30, generates simplified task template data, and sends the simplified task template data to the digital certificate processing service device 20 to generate a digital certificate processing task. In this way, computational load and communication load of the digital certificate processing node 30 and the digital certificate processing service device 20 can be reduced, a delay of data transmission can be reduced, and a time for obtaining the digital certificate processing task can be shortened.

An embodiment of an eleventh aspect of the present application further provides a computer-readable storage medium storing computer-executable instructions, where the computer-executable instructions are configured to perform the distributed digital certificate processing method in the foregoing embodiment.

An embodiment of a twelfth aspect of the present application further provides a computer program product including a computer program stored on a computer-readable storage medium, where the computer program includes program instructions that, when executed by a computer, cause the computer to perform the distributed digital certificate processing method in the foregoing embodiment.

It should be noted that, the technical solutions in the embodiments of the present application may be embodied in the form of a software product. The computer software product is stored in a storage medium, and includes one or more instructions used to cause a computer device (which may be a personal computer, a server, a network device, etc.) to perform all or some of the steps of the methods in the embodiments of the present application. The foregoing storage medium may be a non-transitory storage medium, including: a USB flash drive, a removable hard disk, a read-only memory (ROM), a random access memory (RAM), a magnetic disk, an optical disc or other various media that can store program code, or may be a transitory storage medium.

When used in the present application, although the terms "first", "second", etc. may be used in the present application to describe various elements, these elements should not be limited by these terms. These terms are only used to distinguish one element from another. For example, without changing the meaning of the description, a first element can be referred to as a second element, and similarly, the second element can be referred to as the first element, provided that all the terms "first element" present are renamed consistently and all the terms "second element" present are renamed consistently. The first element and the second element are both elements, but can be different.

The wording used in the present application is only used to describe the embodiments, and is not used to limit the claims. As used in the description of the embodiments and the claims, the singular forms "a", "an", and "the" are also intended to include the plural forms, unless otherwise clearly indicated in the context. Similarly, the term "and/or" as used in the present application refers to any and all possible combinations that include one or more of the associated listed items. Additionally, when used in the present application, the term "comprise" and the variations thereof, such as "comprises" and/or "comprising", refer to the presence of described features, entities, steps, operations, elements, and/or components, but do not exclude the presence or addition of one or more other features, entities, steps, operations, elements, components, and/or a combination thereof.

The aspects, embodiments, implementations, or features in the described embodiments can be used alone or in any combination. The aspects in the described embodiments can be implemented by software, hardware, or a combination thereof. The described embodiments may also be embodied by a computer-readable medium storing computer-readable code, and the computer-readable code includes instructions executable by at least one computing apparatus. The computer-readable medium may be associated with any data storage apparatus capable of storing data that can be read by a computer system. For example, the computer-readable medium may include a read-only memory, a random access memory, a CD-ROM, an HDD, a DVD, a magnetic tape, an optical data storage apparatus, etc. The computer-readable medium may also be distributed in a computer system connected through a network, so that the computer-readable code can be stored and executed in a distributed manner.

With regard to the foregoing technical description, reference may be made to the accompanying drawings, which form a part of the present application and show, through the description, the implementations according to the described embodiments. Although these embodiments are described in sufficient detail to enable those skilled in the art to implement these embodiments, these embodiments are not limiting. In this way, other embodiments can be used, and changes can be made without departing from the scope of the described embodiments. For example, the sequence of operations described in the flowchart is not limiting, and therefore, the sequence of two or more operations set forth in the flowchart and described according to the flowchart can be changed according to several embodiments. As another example, in several embodiments, one or more operations illustrated in the flowchart and described according to the flowchart are optional or may be deleted. Additionally, some steps or functions may be added to the disclosed embodiments, or two or more steps may be performed in reverse order. All these changes are considered to be included in the disclosed embodiments and claims.

Additionally, terms are used in the foregoing technical description to provide a thorough understanding of the described embodiments. However, excessive details are not required to implement the described embodiments. Therefore, the foregoing description of the embodiments is presented for explanation and description. The embodiments presented in the foregoing description and the examples disclosed according to these embodiments are provided separately to add context and help understand the described embodiments. The foregoing description is not intended to be exhaustive or to limit the described embodiments to the precise form of the present application. Based on the teaching described above, modifications, selective applications, and changes are possible. In some cases, well-known processing steps are not described in detail, to avoid unnecessarily affecting the described embodiments.

In the description of the specification, the description with reference to terms such as "an embodiment", "some embodiments", "a schematic embodiment", "an example", "a specific example", or "some examples" means that specific features, structures, materials, or characteristics described in combination with the embodiment(s) or example(s) are included in at least one embodiment or example of the present invention. In the specification, the schematic expressions of the above terms do not necessarily refer to the same embodiments or examples. Furthermore, the specific features, structures, materials or characteristics described may be combined in any one or more embodiments or examples in a suitable manner.

Although the embodiments of the present invention have been shown and described, those of ordinary skill in the art can understand that various changes, modifications, substitutions, and variations can be made to these embodiments without departing from the principles and spirit of the present invention. The scope of the present invention is defined by the claims and equivalents thereof.

## Claims

1. A distributed digital certificate processing method, **characterized in that** the distributed digital certificate processing method is applied to a gateway and comprises:
polling a digital certificate processing node to obtain latest digital certificate processing task template data;
generating simplified task template data of a digital certificate processing task based on the digital certificate processing task template data; and
distributing the simplified task template data to a digital certificate processing service device.

2. The distributed digital certificate processing method according to claim 1, **characterized in that** the generating simplified task template data of a digital certificate processing task based on the digital certificate processing task template data comprises:
extracting, from the digital certificate processing task template data, a field required for digital certificate processing task data, wherein the field comprises a task list;
constructing a Merkle tree of digital certificate transaction data based on the task list;
computing a left tree hash list of the Merkle tree;
generating a block initial digital certificate transaction; and
generating the simplified task template data based on the left tree hash list and the block initial digital certificate transaction.

3. The distributed digital certificate processing method according to claim 1 or 2, **characterized in that** the method further comprises: generating block data in response to simplified block submission information, and submitting the block data to the digital certificate processing node.

4. The distributed digital certificate processing method according to claim 3, **characterized in that** the generating block data in response to simplified block submission information, and submitting the block data to the digital certificate processing node comprises:
obtaining block header information in the simplified block submission information;
adding transaction data based on the block header information; and
submitting assembly information of the block header information and the transaction data to the digital certificate processing node.

5. The distributed digital certificate processing method according to claim 1, **characterized in that** the method further comprises:
obtaining registration information of the digital certificate processing service device, and establishing a connection to the digital certificate processing service device based on the registration information.

6. A gateway, **characterized by** comprising:
an obtaining module configured to poll a digital certificate processing node to obtain latest digital certificate processing task template data;
a first generation module configured to generate simplified task template data of a digital certificate processing task based on the digital certificate processing task template data; and
a first sending module configured to distribute the simplified task template data to a digital certificate processing service device.

7. The gateway according to claim 6, **characterized in that** the first generation module further comprises:
an extraction unit configured to extract, from the digital certificate processing task template data, a field required for digital certificate processing task data, wherein the field comprises a task list;
a construction unit configured to construct a Merkle tree of digital certificate transaction data based on the task list;
a computing unit configured to compute a left tree hash list of the Merkle tree;
a first generation unit configured to generate a block initial digital certificate transaction; and
a second generation unit configured to generate the simplified task template data based on the left tree hash list and the block initial digital certificate transaction.

8. The gateway according to claim 6 or 7, **characterized in that** the gateway further comprises a block submission module configured to generate block data in response to simplified block submission information, and submit the block data to the digital certificate processing node.

9. The gateway according to claim 8, **characterized in that** the block submission module further comprises:
an obtaining unit configured to obtain block header information in the simplified block submission information;
an addition unit configured to add transaction data based on the block header information; and
a submission unit configured to submit assembly information of the block header information and the transaction data to the digital certificate processing node.

10. The gateway according to claim 6, **characterized in that** the gateway further comprises:
a registration and connection module configured to obtain registration information of the digital certificate processing device, and establish a connection to the digital certificate processing service device based on the registration information.

11. A distributed digital certificate processing method, **characterized in that** the distributed digital certificate processing method is applied to a gateway and comprises:
determining whether simplified block submission information is received; and
generating block data in response to the simplified block submission information, and submitting the block data to the digital certificate processing node.

12. The distributed digital certificate processing method according to claim 11, , **characterized in that** the generating block data in response to the simplified block submission information, and submitting the block data to the digital certificate processing node comprises:
obtaining block header information in the simplified block submission information;
adding transaction data based on the block header information; and
submitting assembly information of the block header information and the transaction data to the digital certificate processing node.

13. A gateway, **characterized by** comprising:
a determination module configured to determine whether simplified block submission information is received; and
a block submission module configured to generate block data in response to the simplified block submission information, and submit the block data to the digital certificate processing node.

14. The gateway according to claim 13, **characterized in that** the block submission module further comprises:
an obtaining unit configured to obtain block header information in the simplified block submission information;
an addition unit configured to add transaction data based on the block header information; and
a submission unit configured to submit assembly information of the block header information and the transaction data to the digital certificate processing node.

15. A gateway, **characterized by** comprising:
at least one first processor; and
a first memory communicatively connected to the at least one processor, wherein
the memory stores instructions executable by the at least one first processor, the instructions, when executed by the at least one first processor, causing the at least one first processor to perform a distributed digital certificate processing method of any one of claims 1 to 5, or causing the at least one processor to perform a distributed digital certificate processing method of claim 11 or 12.

16. A distributed digital certificate processing method, **characterized in that** the distributed digital certificate processing method is applied to a digital certificate processing service device and comprises:
receiving simplified task template data of a digital certificate processing task;
generating a digital certificate processing task based on the simplified task template data; and
distributing the digital certificate processing task to a digital certificate processing device.

17. The distributed digital certificate processing method according to claim 16, **characterized in that** the method further comprises:
receiving share information sent by the digital certificate processing device;
verifying whether a block header constructed based on the share information meets a block submission criterion; and
sending simplified block submission information to a gateway if the block header meets the block submission criterion.

18. A digital certificate processing service device, **characterized by** comprising:
a first receiving module configured to receive simplified task template data of a digital certificate processing task;
a second generation module configured to generate a digital certificate processing task based on the simplified task template data; and
a second sending module configured to distribute the digital certificate processing task to a digital certificate processing device.

19. The digital certificate processing service device according to claim 18, **characterized in that** the digital certificate processing service device further comprises:
a second receiving module configured to receive share information sent by the digital certificate processing device;
a verification module configured to verify whether a block header constructed based on the share information meets a block submission criterion; and
a third sending module configured to send simplified block submission information to a gateway if the block header meets the block submission criterion.

20. A digital certificate processing service device, **characterized by** comprising:
at least one second processor; and
a second memory communicatively connected to the at least one second processor, wherein
the memory stores instructions executable by the at least one second processor, the instructions, when executed by the at least one second processor, causing the at least one second processor to perform a distributed digital certificate processing method of claim 16 or 17.

21. A distributed digital certificate processing system, **characterized by** comprising:
a digital certificate processing node;
a gateway of any one of claims 6 to 10 or a gateway of claim 13 or 14, the gateway being connected to the digital certificate processing node;
a digital certificate processing service device of claim 18 or 19, the digital certificate processing service device being connected to the gateway; and
a digital certificate processing device, the digital certificate processing device being connected to the digital certificate processing service device.

22. A computer-readable storage medium having computer-executable instructions stored thereon, wherein the computer-executable instructions are configured to perform a distributed digital certificate processing method of any one of claims 1 to 5, or the computer-executable instructions are configured to perform a distributed digital certificate processing method of claim 11 or 12, or the computer-executable instructions are configured to perform a distributed digital certificate processing method of claim 16 or 17.

23. A computer program product, comprising a computer program stored on a computer-readable storage medium, wherein the computer program comprises program instructions that, when executed by a computer, cause the computer to perform a distributed digital certificate processing method of any one of claims 1 to 5, or cause the computer to perform a distributed digital certificate processing method of claim 11 or 12, or the computer-executable instructions are configured to perform a distributed digital certificate processing method of claim 16 or 17.
